# EUROPEAN PATENT SPECIFICATION

(11) **EP 1 311 562 B1**
(45) Date of publication and mention of the grant of the patent: **19.05.2004**
(21) Application number: 01962119.2
(22) Date of filing: 10.08.2001
(51) Int. Cl.: C08F 8/14, C08G 81/02, C08L 29/14

(54) **PROCESS FOR CONVERSION OF POLYVINYL BUTYRAL (PVB) SCRAP INTO PROCESSABLE PELLETS**
VERFAHREN ZUR UMSETZUNG VON POLYVINYLBUTYRAL(PVB)-ABFALL ZU VERARBEITBAREN GRANULATEN
PROCEDE DE CONVERSION DES DECHETS DE POLYBUTYRAL DE VINYLE (PVB) EN PASTILLES TRAITABLES

(30) Priority: 10.08.2000 US 224126 P
(43) Date of publication of application: 21.05.2003
(73) Proprietor: E.I. DUPONT DE NEMOURS AND COMPANY, Wilmington, Delaware 19898 (US)
(72) Inventor: HOFMANN, George, Henry, Wilmington, DE 19803 (US)
(74) Representative: Abitz, Walter, Dr.-Ing.
(86) International application number: PCT/US2001/025283
(87) International publication number: WO 2002/012356

(56) References cited:
- EP-A- 0 778 292
- EP-A- 0 834 520
- EP-A- 0 853 097
- WO-A-93/02141
- US-A- 2 533 314
- US-A- 2 828 289
- US-A- 3 434 915
- US-A- 3 736 311
- US-A- 5 770 654

## Description

### BACKGROUND OF THE INVENTION

### Field of the Invention

This invention relates to a process for preparing pellets from polyvinyl butyral scrap material. This invention particularly relates to a process for preparing pellets of modified polyvinyl butyral useful for preparing blended polyvinyl butyral compositions.

### Description of the Related Art

Polyvinyl butyral (PVB) is a thermoplastic material useful for imparting shatter-resistance to glass in such applications as windshields for automobiles and window glass in homes and buildings, for example. The preparation of polyvinyl butyral is known, and is practiced commercially. For example, Butacite® is a polyvinyl butyral product manufactured by DuPont. Solutia also manufactures polyvinyl butyral products.

PVB scrap can be generated during a PVB manufacturing process, for example, if process errors occur that result in off-quality production rolls or otherwise unusable material. In preparing windshields and other laminate articles comprising a polyvinyl butyral layer, glass manufacturers can generate PVB scrape material when trimming excess PVB from the edges of a glass laminate, or from production errors resulting in unusable products. Conventional practice is to incinerate PVB scrap material at a cost to the manufacturer. This can be an expensive practice because millions of pounds of PVB scrap material are incinerated each year.

It is known that PVB blends with other polymer materials have utility. For example, U.S. Patent No. 5,514,752 describes PVB/polypropylene blends, and U.S. Patent No. 5,770,654 describes PVB/polyamide blends. PVB can improve the flexibility, polarity and toughness of polyolefins, polyamides, and polyvinylchloride. However, use of PVB in polymer blends is not without problems.

PVB is a material that can be difficult to work with because of the tendency of PVB to adhere to itself. Sheets of PVB can stick together, or bind, with such strength that it is very difficult to separate the layers - even to the extent that the layers cannot be separated. Such irreversible self-adhesion by PVB is referred to in the art of PVB manufacture as "blocking". Once PVB "blocks", it can be extremely difficult, if not impossible, to process. PVB is generally stored cold to reduce the tendency to block. Refrigerated vehicles are used to ship PVB for the same reason. The tendency to block can make manufacturing processes that incorporate PVB very complex and difficult. Continuous processes that in which PVB is handled can be very expensive processes to run, and therefore are not practical commercial operations. Blends of PVB with other materials can block in the same manner as homogenous PVB compositions. Therefore, blends of PVB with other polymers can be difficult to obtain in a cost effective manner.

It is an object of the present invention to reduce the amount of polyvinylbutyral scrap that is sent for incineration. It is a also an object of the present invention to convert polyvinylbutyral scrap material into a processable form. It is further an object of the present invention to convert polyvinylbutyral scrap material into pellets, useful for preparing PVB/polymer blends. It is still a further object of the present invention to convert polyvinylbutyral scrap material into commercially useful polymer blends.

### SUMMARY OF THE INVENTION

The present invention is a non-blocking chemically modified polyvinylbutyral (PVB) composition in pellet form, comprising a chemically modified PVB, wherein the modified PVB is the reaction product of unmodified polyvinylbutyral, having hydroxyl functionality, and a second component or mixture, wherein the second component reacts with at least a portion of the hydroxyl functionality of the PVB.

In another aspect, the present invention is a process for converting polyvinylbutyral (PVB) into pellet form, wherein the pellets do not become irreversibly joined, the process comprising the steps: obtaining a modified PVB composition by mixing PVB and a second component under conditions suitable to cause a reaction between PVB and the second component, wherein the second component can chemically react with hydroxyl functionality present in a PVB polymer; converting the modified PVB composition into pellet form by physical or mechanical means at a temperature of greater than at least 20°C.

### DETAILED DESCRIPTION OF THE INVENTION

In one embodiment, the present invention is a modified non-blocking polyvinylbutyral (PVB) composition in pellet form. Unmodified PVB is an uncrosslinked gum that flows and masses together, that is it blocks, typically at temperatures above about 4°C (approximately 40°F). For this reason it is difficult to convert PVB into a blended material, particularly by a continuous process. Modified PVB of the present invention is free-flowing, without blocking (non-blocking) at temperatures above about 4°C, preferably at temperatures above about 20°C, more preferably at temperatures above about 50°C, and most preferably temperatures above about 60°C, and can be useful in a continuous compounding operation to obtain other PVB blends.

In the present invention, the term "non-blocking materials" can include materials that can adhere to similar or identical compositions, but the adhesion can be overcome with varying degrees of force. For the purposes of the present invention, a composition can: (a) be completely non-adhesive, i.e. showing no tendency to self-adhere; (b) show slight, medium, or strong adhesion wherein polymeric pieces can be separated from one another but only with some degree of force; or (c) show irreversible adhesion wherein the polymer pieces cannot be separated even with force. Non-blocking compositions of the present invention, include only compositions of types (a) and/or (b), hereinabove.

Without being bound by theory, non-blocking PVB compositions of the present invention have some measure of crystallinity. Modification of PVB can be by physical blending or by chemical modification. It is preferred for the purposes of the present invention that PVB be chemically modified to add crystallinity by covalently bonding to a second component. Modification of PVB in this manner can result in physical compatibility in blends of PVB with a second component. PVB has hydroxyl functionality, and can react with chemical compositions having functionality capable of reacting with hydroxyl groups. Chemical modification can occur when the PVB resin is reacted with a second component. The second component can be any polymer that is capable of reacting with the hydroxyl functionality of the PVB. For example, the second component can include carboxylic acid functionality or derivatives thereof. Such derivatives can include ester, anhydride, isocyanate, or acid chloride functionality, for example. Multicomponent mixtures of various hydroxyl-reactive functionalities can be useful in the practice of the present invention.

The second component can be monomeric, polymeric, or a mixed composition. Preferably the second component is a polymer composition that includes anhydride functionality, such as is available commercially from E. I. DuPont de Nemours and Company under the Fusabond® brand name, or carboxylic acid functionality. Fusabond® polymers are polyolefins having anhydride functionality.

In another embodiment, the present invention is a process for obtaining a pelletized, non-blocking PVB composition, the composition being useful in a continuous compounding operation, such as one wherein the modified PVB can be continuously compounded with other polymeric materials. The process comprises the step: mixing polyvinylbutyral with a second component under conditions wherein a chemical reaction will occur between the unmodified PVB and the second component. Such conditions conducive for carrying out a chemical reaction can comprise the steps: (1) exposing the PVB and second component or mixture to a temperature such that a melt blend (melt) is obtained; (2) cooling the melt to obtain a solid composition of chemically modified PVB; and (3) pelletizing the solid composition. The PVB and second component can be mixed in a ratio of from about 1:100 to about 100:1 PVB:second component (parts per hundred parts, by weight). Preferably, the PVB and second component are mixed at a ratio of from about 5:1 to about 100:1, more preferably at a ratio of from about 10:1 to about 50:1, and most preferably from about 10:1 to about 25:1.

A melt blend of the preceding paragraph can be obtained by heating the PVB mixture at a temperature of from about 100°C to about 260°C. Preferably, the blend is obtained at a temperature of from about 120°C to about 255°. Most preferably, the melt blend is obtained at a temperature of from about 150°C to about 250°C.

An antioxidant is not required, however one is preferred. If included, the antioxidant can be present in an amount of at least about 0.1% by weight.

A modified-PVB composition of the present invention is non-blocking above a temperature of about 20°C. Particularly, a modified PVB composition is non-blocking above a temperature of about 50°C, more particularly above a temperature of about 60°C, and even more particularly above 75°C.

In another embodiment, the present invention is a process for preparing a blend of modified PVB with at least one other non-reactive polymer. For example, modified PVB can be blended with polypropylene, polyvinylchoride, nylon, olefinic copolymers such as acid copolymers, other thermoplastic materials, or mixtures thereof. PVB blends of the present invention can include a compatibilizer, which can make the modified PVB compatible with other components of the blend. The compatibilizer can be Fusabond®, for example. Blends of modified PVB can be obtained by either a batch process or a continuous process. Polymer blends of modified PVB can be obtained in a continuous process by extrusion of pellets of modified PVB with, for example, polypropylene. Alternatively, blends of the present invention can be obtained by a batch process, using a mixer.

Modified PVB can be extruded in either a single screw extruder or a twin screw extruder, at temperatures in the range of from about 75°C to about 250°C. Modified PVB pellets can be obtained from extruded modified PVB, and can be blended with other thermoplastic polymers or copolymers by any means known in the art of preparing polymer blends. For example, blends can be obtained by extrusion, grinding, melt-blending, crushing, or other means of physically blending polymers.

Objects or articles comprising polymers of the present invention can be prepared from the polymers and polymer blends of the present invention by methods know to those skilled in the art.

### EXAMPLES

The Examples are presented for illustrative purposes only, and not intended to limit the scope of the present invention in any way. PVB used in the Examples was recycled from windshield edge trim.

### Examples 1-4

Four samples (A,B,C and D) of PVB/Fusabond mixture were prepared according to the following procedure, using the amounts shown in Table 1, below.

PVB, Fusabond® A MG-423D (ethylene/alkyl acrylate/CO copolymer that has been modified with 1% maleic anhydride graft) or Fusabond® P MD353D (polypropylene with 1.4% maleic anhydride graft), and Irgonox® 1010 were mixed at 230°C in a laboratory batch mixer until a homogeneous melt blend was obtained. The melt was removed and cooled quickly in dry ice. The mixture was dried in a vacuum oven at ambient temperature. The M.I. was determined at 190°C of 2160 grams. Shore A/D Hardness values were determined at 0 and 15 seconds.

**Table 1**

| | | Shore Hardness (0 sec /15 sec) | | Component (pph) | | |
|---|---|---|---|---|---|---|
| Sample¹ | Melt Index | A | D | PVB | F^{a} | Irganox 1010 |
| A (Ex. ) | 1.9 | 82/70 | 56/24 | 100.0 | 5.0 | 1.0 |
| B (Ex. ) | 0.7 | 84/74 | 56/26 | 100.0 | 10 | 1.0 |
| C (Ex. ) | 2.0 | 81/69 | 56/23 | 100.0 | 5.0 | 1.0 |
| D (Ex. ) | 0.3 | 84/74 | 56/25 | 100.0 | 10.0 | 1.0 |
| Control^{@} | 3.1 | 72/56 | 51/16 | 100.0 | 0 | 0 |

| | | | | | | |
|---|---|---|---|---|---|---|
| ^{a}Fusabond®. Samples A and B include Fusabond® A MG-423D; Samples C and D include Fusabond® P MD-353D. | | | | | | |
| ^{@}Not an example of the present invention. Typical values. | | | | | | |

### Examples 5-9

### Blocking Test

1/16"x3"x6" plaques of each Sample were pressed at 190°C as was a PVB control. The plaques were cut in half (to make 3x3 squares) and one half placed on top of the other and put on a metal tray lined with Teflon coated aluminum foil. A 1"x3" 45-gram weight was placed on the layers and a thin strip of fep film was placed underneath the weight to prevent sticking of the weight to the samples. The Samples were exposed to relative humidity of 50% at 23° overnight. The following results were obtained.
Sample A (Ex. 5) exhibited slight sticking but was easily separated.
Sample B (Ex. 6) performed the same as A.
Sample C (Ex. 7) stuck slightly more than A, B, or D but was easily separated.
Sample D (Ex. 8) gave the same result as Samples A and B.
PVB control (Ex. 9) (100% PVB) could only be separated at the corners.

### Examples 10 - 14

Samples A, B, C, D, and a PVB control were prepared as above and then exposed to 38°C temperature in an air circulating oven on a metal tray lined with Teflon® coated foil for 24 hours. The Samples were allowed to cool on metal tray, with weight in place, for a period of 30 minutes. The following results were obtained.
Samples A (Ex. 10), B (Ex. 11), and C (Ex. 12) - the layers stuck together where the weight was in place.
Sample D (Ex. 13) - the layers separated cleanly, but with some resistance. PVB control (Ex. 14) - the layers completely self-adhered (blocked).

### Example 15

Sample D was put through the above conditions except that the temperature was raised to 44°. The same result was obtained as above for Sample D.

### Example 16 - 35

Samples G through K2 were prepared having the compositions shown in Table 2. The Samples were prepared using a Haake laboratory batch mixer. PVB, polypropylene (Profax®) or high density polyethylene, and Fusabond with Irgonox 1010 were mixed at 200°C until a homogeneous melt blend was obtained. The melt was removed and cooled quickly in dry ice. The mixture was dried in a vacuum oven at ambient temperature. The Control is unblended, unmodified PVB sheet from recycled edge trim. The melt index was measured at 190°C, 2160 grams, and reported for each in Table 2. Shore A and D for each is reported in Table 2. Adhesion was tested as described hereinabove and the results are reported in Table 3.

**Table 2**

| | | Shore Hardness (0 sec /15 sec) | | Component (pph) | | |
|---|---|---|---|---|---|---|
| Sample¹ | Melt Index | A | D | PVB | F^{a} | PP^{b} |
| G (Ex. 16) | 4.4 | 73/59 | 47/19 | 100 | 2.5 | 7.5 |
| H (Ex. 17) | 2.9 | 63/52 | 46/18 | 100 | 5.0 | 5.0 |
| I (Ex. 18) | 3.1 | 66/53 | 46/18 | 100 | 7.5 | 2.5 |
| J (Ex. 19) | 1.7 | 75/61 | 49/19 | 100 | 10 | 0.0 |
| K (Ex. 20) | 4.5 | 80/69 | 54/24 | 100 | 5.0 | 10.0 |
| K2 (Ex. 20) | 3.1 | 81/68 | 49/22 | 100 | 5.0 | 10.0^{x} |
| Control^{@} | 3.1 | 72/56 | 51/16 | 100 | 0 | 0 |

| | | | | | | |
|---|---|---|---|---|---|---|
| ¹All samples include 0.1 pph Irganox® 1010 antioxidant, except for the Control, which has no antioxidant. | | | | | | |
| ^{@}Not an example of the present invention. Typical values. | | | | | | |
| ^{a}F = Fusabond®, all samples except for K2 include Fusabond® P MD 353D; K2 includes Fusabond® E MB496D which is high density polyethylene/1.2% maleic anhydride graft. | | | | | | |
| ^{b}PP is polypropylene (Profax® 6323) which is polypropylene of melt index 5.0. | | | | | | |
| ^{x}K2 includes high density polyethylene, melt index 14, instead of polypropylene. | | | | | | |

**Table 3**

| Sample | Adhesion after treatment @ Temperature (°C) | | | Separation after treatment @ Temperature (°C) | | |
|---|---|---|---|---|---|---|
| | 23 | 38 | 44 | 23 | 38 | 44 |
| E (Ex. 21) | sl | st | -- | easily | x | -- |
| F (Ex. 22) | sl | m | m | easily | yes | yes |
| G (Ex. 23) | sl | sl | sl | easily | easily | easily |
| H (Ex. 24) | sl | sl | sl | easily | easily | easily |
| I (Ex. 25) | sl | sl | sl | easily | easily | easily |
| J (Ex. 26) | sl | sl | sl | easily | easily | easily |
| K (Ex. 27) | none | none | none | easily | easily | easily |
| K2 (Ex. 28) | none | sl | sl | easily | easily | easily |
| Control^{@} | st | -- | -- | x | -- | -- |

| | | | | | | |
|---|---|---|---|---|---|---|
| ^{@}Not an example of the present invention. none = no adhesion; sl = slight adhesion; m = medium adhesion; st = strong adhesion easily = easily separated; yes = separated with effort; x = did not separate | | | | | | |

### Examples 36 - 44

Samples L through T were prepared having the compositions shown in Table 4. The Samples were prepared using a Haake laboratory batch mixer. PVB, Elvaloy® 441 (ethylene/n-butyl acrylate/CO terpolymer available from E.I. DuPont de Nemours and Company) with an MI of 10 or Elvaloy® 741 (ethylene/vinyl acetate/CO terpolymer available from E.I. DuPont de Nemours and Company) with a MI of 35, and Fusabond® A with Irgonox® 1010 were mixed at 200°C until a homogeneous melt blend was obtained. The melt was removed and cooled quickly in dry ice. The mixture was dried in a vacuum oven at ambient temperature. The Control is unblended, unmodified PVB sheet from recycled edge trim. The melt index was measured at 190°C, 2160 grams, and reported for each in Table 4. Shore A and D for each is reported in Table 4. Adhesion was tested as described hereinabove and the results are reported in Table 5.

**Table 4**

| | | Shore Hardness (0 sec/15 sec) | | Component (pph) | | | |
|---|---|---|---|---|---|---|---|
| Sample | Melt Index | A | D | PVB | Fusabond® A MG-423D | Elvaloy® 441 | Irganox® 1010 |
| N(Ex.31) | 2.7 | 76/60 | 48/17 | 100 | 2.5 | 7.5 | 0.1 |
| O (Ex. 32) | 3.5 | 79/61 | 53/17 | 100 | 5.0 | 5.0 | 0.1 |
| P (Ex. 33) | 2.9 | 75/58 | 51/18 | 100 | 7.5 | 2.5 | 0.1 |
| Q (Ex. 34) | 3.1 | 79/63 | 55/17 | 100 | 10 | 0.0 | 0.1 |
| R (Ex. 35) | 1.8 | 80/71 | 54/24 | 100 | 5.0 | 10.0 | 0.1 |
| S (Ex. 36) | 2.2 | 80/67 | 49/22 | 100 | 5.0 | 5.0* | 0.1 |
| T (Ex. 37) | 1.1 | 86/72 | 55/25 | 100 | 5.0 | 10* | 0.1 |
| Control^{@} | 3.1 | 72/56 | 51/16 | 100 | 0 | 0 | 0 |

| | | | | | | | |
|---|---|---|---|---|---|---|---|
| ^{@}Not an example of the present invention. Typical values. | | | | | | | |

**Table 5**

| | Adhesion after treatment @ Temperature (°C) | | | Separation after treatment @ Temperature (°C) | | |
|---|---|---|---|---|---|---|
| Sample | 23 | 38 | 44 | 23 | 38 | 44 |
| N | sl | sl | sl | easily | easily | easily |
| O | sl | sl | m | easily | easily | yes |
| P | sl | m | m | easily | yes | yes |
| Q | sl | st | st | easily | yes+ | yes+ |
| R | none | none | none | easily | easily | easily |
| S | none | m | m | easily | yes | yes |
| T | none | none | none | easily | easily | easily |
| Control^{@} | st | -- | -- | x | -- | -- |

| | | | | | | |
|---|---|---|---|---|---|---|
| ^{@}Not an example of the present invention. none = no adhesion; sl = slight adhesion; m = medium adhesion; st = strong adhesion easily = easily separated; yes = separated with slight effort; yes⁺ = separated with force; x = did not separate | | | | | | |

### Examples 45 - 47

2000 pounds each of pellet Samples
(U - V) were obtained on a Banbury mixer operated at 177°C (350°F) coupled with a single screw pelletizing extruder from the compositions shown in Table 6. Adhesion was tested as described hereinabove and none of the samples showed any self-adhesion.

**Table 6**

| | | | Component (pph) | | | | | |
|---|---|---|---|---|---|---|---|---|
| Sample | Melt Index | Shore A Hardness (init./15 sec) | PVB | F-P¹ | F-A² | Elvaloy® 441 | Profax® 6323⁴ | Irganox® 1010 |
| U³ | 5.2 | 75/63 | 100 | 5.0 | 0.0 | 0.0 | 10 | 0.1 |
| V³ | 3.6 | 78/66 | 100 | 5.0 | 0.0 | 0.0 | 5.0 | 0.1 |
| W³ | 1.4 | 84/74 | 100 | 0.0 | 5.0 | 10 | 0.0 | 0.1 |

| | | | | | | | | |
|---|---|---|---|---|---|---|---|---|
| ¹Fusabond® P MD-353D | | | | | | | | |
| ²Fusabond® A MG-423D | | | | | | | | |
| ³No adhesion observed. | | | | | | | | |
| ⁴MI = 5 | | | | | | | | |

### Examples 48, 50, and 52

In these examples, Sample U was pellet-blended with polypropylene in the proportions indicated in Table 7, and fed as a single stream into a 30 mm twin-screw extruder. Samples U3 and U4 included calcium carbonate filler. Physical properties were tested and the results recorded in Table 7 and 8.

### Examples 49, 51, and 53

In these examples, Sample V was pellet-blended with polypropylene in the proportions indicated in Table 7, and fed as a single stream into a 30 mm twin-screw extruder. Samples V3 and V4 included calcium carbonate filler. Physical properties were tested and the results recorded in Tables 7 and 8.

**Table 7**

| | MI @ 190°C | | Shore Hardness (0 sec /15 sec) | | Component (pph) | | | | |
|---|---|---|---|---|---|---|---|---|---|
| Sample | @ 2160 g | @ 21.6 kg | A | D | Sample U | Sample V | PX 6823 | IRG | CaCO₃ |
| U2 | 2.7 | 256 | 83/74 | 56/28 | 690 | 0 | 30 | 1.0 | 0 |
| U3 | 1.9 | 188 | 88/82 | 63/34 | 690 | 0 | 30 | 1.0 | 200 |
| U4 | 1.2 | 133 | 87/83 | 64/39 | 690 | 0 | 30 | 1.0 | 400 |
| V2 | 1.7 | 152 | 85/78 | 59/29 | 0 | 660 | 60 | 1.0 | 0 |
| V3 | 1.4 | 120 | 89/84 | 64/37 | 0 | 660 | 60 | 1.0 | 200 |
| V4 | 0.9 | 97 | 90/86 | 63/38 | 0 | 660 | 60 | 1.0 | 400 |
| PX 6823 is Profax® 6823 (polypropylene of MI = 0.2). | | | | | | | | | |

**Table 8**

| Sample | Initial Modulus (psi) | Tensile Strength @ Max (psi) | Elongation @ Max (%) | Tensile Strength @ Break (psi) | Elongation @ Break (%) |
|---|---|---|---|---|---|
| U2 | 1412 | 4518 | 287 | 4513 | 288 |
| U3* | 2255 (1495) | 2569 (3218) | 162 (234) | 2501 (3216) | 164 (234) |
| U4* | 4308 (2557) | 1894 (2308) | 65 (154) | 1624 (2292) | 69 (157) |
| V2 | 2446 | 4281 | 284 | 4275 | 284 |
| V3 | 3544 | 2744 | 152 | 2733 | 155 |
| V4 | 3553 | 2412 | 132 | 2369 | 135 |

| | | | | | |
|---|---|---|---|---|---|
| *Samples appeared undermixed and were re-extruded to give the values shown in parentheses. | | | | | |

### Examples 54 - 56

Samples X through Z were prepared having the compositions shown in Table 9. The Samples were prepared using a Haake mixer. PVB, polypropylene (Profax®), and Fusabond P with Irgonox 1010 were mixed at 200°C until a homogeneous melt blend was obtained. The melt was removed and cooled quickly in dry ice. Samples X and Z included calcium carbonate filler. The mixtures were dried in a vacuum oven at ambient temperature. Physical properties were tested and the results recorded in Tables 9 and 10.

**Table 9**

| | MI @ 190°C | | Shore Hardness (0 sec/15 sec) | | Component (pph) | | | | |
|---|---|---|---|---|---|---|---|---|---|
| Sample | @ 2160 g | @ 21.6 kg | A | D | PVB | F-P | PX 6723 | IRG | CaCO₃ |
| X | 2.6 | 238 | 82/73 | 48/26 | 600 | 20 | 100 | 1.0 | 0 |
| Y | 2.1 | 216 | 79/70 | 58/32 | 600 | 20 | 100 | 1.0 | 200 |
| Z | 1.5 | 179 | 91/88 | 70/42 | 600 | 20 | 100 | 1.0 | 400 |
| PX 6723 is Profax® 6723 (polypropylene of MI = 0.3. | | | | | | | | | |

**Table 10**

| Sample | Initial/Flex Modulus (psi) | Tensile Strength @ Max (psi) | Elongation @ Max (%) | Tensile Strength @ Break (psi) | Elongation @ Break (%) |
|---|---|---|---|---|---|
| X | 1404/1048 | 3584 | 279 | 3580 | 279 |
| Y | 1577/1341 | 3019 | 242 | 2992 | 242 |
| Z | 2678/2749 | 2479 | 203 | 2477 | 203 |

### Examples 57 - 64

Samples NY1 - NY4 and NU1 - NU 4 were prepared having the compositions shown in Table 11. The Samples were prepared using a Haake mixer. For Nylon blends, PVB, Nylon 6, and Irgonox 1010 were mixed at 230°C until a homogeneous melt blend was obtained. For Nucrel® blends PVB, Nucrel® and Irganox 1010 were mixed at 210°C. Each melt was removed and cooled quickly in dry ice. The mixtures were dried in a vacuum oven at ambient temperature. The Control is unblended, unmodified PVB sheet from recycled edge trim. The melt index of each sample was measured at 190°C, 2160 grams, and reported for each in Table 11. Shore A and D for each is reported in Table 11. Adhesion was tested as described hereinabove and the results are reported in Table 12.

### Examples 57A - 57E

Samples NY5 - NY9 were prepared having the compositions shown in Table 11A. The Samples were prepared using a Haake mixer. PVB, Nylon 6, amorphous nylon (Selar 3426) and Irgonox 1010 were mixed at 230°C until a homogeneous melt blend was obtained. Nylon 6 was added for additional crystallinity. Each melt was removed and cooled quickly in dry ice. The mixtures were dried in a vacuum oven at ambient temperature. The Control is unblended, unmodified PVB sheet from recycled edge trim. The melt index of each sample was measured at 190°C, 2160 grams, and reported for each in Table 11A. Shore A and D for each is reported in Table 11A. Adhesion was tested as described hereinabove and the results are reported in Table 12A.

**Table 11**

| | | Shore Hardness (0 sec/15 sec) | | Component (pph) | | | |
|---|---|---|---|---|---|---|---|
| Sample | Melt Index | A | D | PVB | Capron® 8202 | Nucrel® 0407^{a} | Irganox® 1010 |
| NY1 | 3.9 | 67/52 | 48/16 | 100 | 5.0 | 0 | 0.1 |
| NY2 | 3.1 | 68/56 | 46/19 | 100 | 10 | 0 | 0.1 |
| NY3 | 2.1 | 71/61 | 53/23 | 100 | 20 | 0 | 0.1 |
| NY4 | 1.0 | 76/70 | 58/30 | 100 | 40 | 0 | 0.1 |
| NU1 | 4.8 | 68/53 | 46/15 | 100 | 0 | 5.0 | 0.1 |
| NU2 | 4.1 | 68/55 | 48/17 | 100 | 0 | 10 | 0.1 |
| NU3 | 4.8 | 75/62 | 47/18 | 100 | 0 | 20 | 0.1 |
| NU4 | 8.6 | 76/67 | 45/21 | 100 | 0 | 40 | 0.1 |
| Control^{@} | 3.1 | 72/56 | 51/16 | 100 | 0 | 0 | 0 |

| | | | | | | | |
|---|---|---|---|---|---|---|---|
| ^{@}Not an example of the present invention. Typical values. | | | | | | | |
| ^{a} 4% methacrylic acid. MI = 7. | | | | | | | |

**Table 11A**

| | | Shore Hardness (0 sec/15 sec) | | Component (pph) | | | |
|---|---|---|---|---|---|---|---|
| Sample | Melt Index | A | D | PVB | Nylon 6 (Capron 8202) | Selar 3426^{a} | Irganox® 1010 |
| NY5 | 3.9 | 73/61 | 49/20 | 100 | 5.0 | 5.0 | 0.2 |
| NY6 | 2.7 | 69/61 | 48/23 | 100 | 10 | 5.0 | 0.2 |
| NY7 | 2.5 | 76/65 | 51/24 | 100 | 15 | 5.0 | 0.2 |
| NY8 | 3.1 | 74/63 | 51/23 | 100 | 5.0 | 10 | 0.2 |
| NY9 | 3.5 | 79/71 | 56/25 | 100 | 10 | 10 | 0.2 |
| Control^{@} | 3.1 | 72/56 | 51/16 | 100 | 0 | 0 | 0 |

| | | | | | | | |
|---|---|---|---|---|---|---|---|
| ^{@}Not an example of the present invention. | | | | | | | |
| ^{a} Amorphous nylon having carboxylic acid functionality. | | | | | | | |

**Table 12**

| | Adhesion after treatment @Temperature (°C) | | | Separation after treatment @ Temperature (°C) | | |
|---|---|---|---|---|---|---|
| Sample | 23 | 38 | 44 | 23 | 38 | 44 |
| NY1 | m | m | st | yes | yes | x |
| NY2 | m | m | st | yes | yes | yes+ |
| NY3 | sl | m | st | easily | yes | yes+ |
| NY4 | none | m | st | easily | yes | yes+ |
| NU1 | sl | st | st | easily | yes+ | yes+ |
| NU2 | sl | m | st | easily | yes | yes+ |
| NU3 | sl | sl | sl | easily | easily | easily |
| NU4 | none | none | none | easily | easily | easily |
| Control^{@} | st | -- | -- | x | -- | -- |

| | | | | | | |
|---|---|---|---|---|---|---|
| ^{@}Not an example of the present invention. none = no adhesion; sl = slight adhesion; m = medium adhesion; st = strong adhesion easily = easily separated; yes = separated with slight effort; yes+ = separated with force; x = did not separate | | | | | | |

**Table 12A**

| | Adhesion after treatment @Temperature (°C) | | | Separation after treatment @ Temperature (°C) | | |
|---|---|---|---|---|---|---|
| Sample | 23 | 38 | 44 | 23 | 38 | 44 |
| NY5 | sl | m | m | easily | yes | yes |
| NY6 | sl | sl | m | easily | easily | yes |
| NY7 | sl | sl | sl | easily | easily | easily |
| NY8 | m | m | m | yes | yes | yes |
| NY9 | sl | m | st | easily | yes | yes+ |
| Control^{@} | st | -- | -- | x | -- | -- |

| | | | | | | |
|---|---|---|---|---|---|---|
| ^{@}Not an example of the present invention. none = no adhesion; sl = slight adhesion; m = medium adhesion; st = strong adhesion easily = easily separated; yes = separated with slight effort; yes+ = separated with force; x = did not separate | | | | | | |

### Examples 65 - 74

Samples PPG1 through PPG8 were prepared having the compositions shown in Table 13. The Samples were prepared using a 30 mm twin screw extruder. PVB pellets (Modifier G), polypropylene (Profax®) and Fusabond® pellet blend were extrusion compounded at 230°C. The melt was quenched in water and pelletized. Samples PPG7 and PPG8 included calcium carbonate as filler. The pellets were dried in a vacuum oven at ambient temperature. Physical properties were tested and the results recorded in Tables 13 and 14. Samples PPG9 and PPG10 were obtained by re-mixing samples PPG1 and PPG2, respectively, with an additional 10 parts of Fusabond® in the batch mixer.

**Table 13**

| | MI @ 190°C | | | Component (pph) | | | |
|---|---|---|---|---|---|---|---|
| Sample | @ 2160 g | @ 21.6 kg | Shore D Hardness (0 sec /15 sec) | Modifier G^{a} | F-P^{b} | PP^{*} | CaCO₃ |
| PPG1 | 0.8 | 103 | 76/57 | 70 | 0 | 100 | 0 |
| PPG2 | 1.2 | 167 | 70/52 | 120 | 0 | 100 | 0 |
| PPG3 | 0.6 | 89 | 63/42 | 220 | 0 | 100 | 0 |
| PPG4 | 0.1 | 26 | 65/46 | 220 | 10 | 100 | 0 |
| PPG5 | 1.4 | 160 | 55/33 | 420 | 0 | 100 | 0 |
| PPG6 | 2.3 | 190 | 54/31 | 620 | 0 | 100 | 0 |
| PPG7 | 1.6 | 184 | 60/38 | 620 | 0 | 100 | 200 |
| PPG8 | 1.0 | 129 | 64/42 | 620 | 0 | 100 | 400 |
| PPG9 | 0.3 | 40 | 74/56 | 70 | 10 | 100 | 0 |
| PPG10 | 0.3 | 58 | 70/52 | 120 | 10 | 100 | 0 |

| | | | | | | | |
|---|---|---|---|---|---|---|---|
| ^{a}Modifier G is Sample U, hereinabove. | | | | | | | |
| ^{b}F-P is Fusabond® P. | | | | | | | |
| ^{*}PP is polypropylene Profax® 6823, M.I. = 0.2. | | | | | | | |

**Table 14**

| Sample | Internal Modulus (psi) | Tensile Strength @ Max (psi) | Elongation @ Max (%) | Tensile Strength @ Break (psi) | Elongation @ Break (%) |
|---|---|---|---|---|---|
| PPG1 | 49639 | 3548 | 24 | 3240 | 185 |
| PPG2 | 37440 | 3718 | 187 | 3088 | 200 |
| PPG3 | 13297 | 5049 | 284 | 5041 | 284 |
| PPG4 | 26476 | 5188 | 278 | 5183 | 278 |
| PPG5 | 2568 | 4651 | 296 | 4644 | 296 |
| PPG6 | 2106 | 4276 | 268 | 4272 | 268 |
| PPG7 | 4246 | 2203 | 111 | 2195 | 115 |
| PPG8 | 5400 | 2319 | 110 | 2315 | 113 |
| PPG9 | 50790 | 4443 | 229 | 4428 | 232 |
| PPG10 | 39080 | 3922 | 181 | 3915 | 177 |

### Examples 75 - 78

Samples MG1, MG2, ME1, and ME2 were prepared having the compositions shown in Table 15. The Samples were prepared using a Haake mixer. PVB pellets, polypropylene (Profax®), and Fusabond® (with Irgonox 1010) were mixed at 200°C until a homogeneous melt blend was obtained. The melt was removed and cooled quickly in dry ice. Samples MG2 and ME2 included calcium carbonate filler. The mixtures were dried in a vacuum oven at ambient temperature. Physical properties were tested and the results recorded in Tables 15 and 16.

**Table 15**

| | | Shore Hardness (0 sec /15 sec) | | Component (pph) | | | | |
|---|---|---|---|---|---|---|---|---|
| Sample | MI @ 190°C @ 2160 g | A | D | Sample K | Sample K2 | PP¹ | IRG | CaCO₃ |
| MG1 | 4.9 | 74/65 | 55/24 | 690 | 0 | 30 | 1.0 | 0 |
| ME1 | 4.0 | 80/71 | 50/25 | 0 | 690 | 30 | 1.0 | 0 |
| MG2 | 5.1 | 86/80 | 61/35 | 690 | 0 | 30 | 1.0 | 400 |
| ME2 | 4.4 | 87/79 | 58/35 | 0 | 690 | 30 | 1.0 | 400 |

| | | | | | | | | |
|---|---|---|---|---|---|---|---|---|
| ¹PP is polypropylene Profax® 6823, M.I = 0.2. | | | | | | | | |

**Table 16**

| Sample | Internal Modulus (psi) | Tensile Strength @ Max (psi) | Elongation @ Max (%) | Tensile Strength @ Break (psi) | Elongation @ Break (%) |
|---|---|---|---|---|---|
| MG1 | 792 | 3126 | 287 | 3120 | 287 |
| ME1 | 672 | 3131 | 282 | 3123 | 282 |
| MG2 | 1493 | 1685 | 139 | 1628 | 146 |
| ME2 | 1562 | 1727 | 167 | 1714 | 169 |

### Examples 79 - 85

Samples PVC1 through PVC7 were prepared having the compositions shown in Table 17. The Samples were prepared using a Haake batch mixer. Modifier H (Sample W above), polyvinylchloride, and, optionally, Fusabond® were mixed at 200°C until a homogeneous melt blend was obtained. The melt was removed and cooled quickly in dry ice. Sample PVC7 included calcium carbonate. The blends were dried in a vacuum oven at ambient temperature. Physical properties were tested and the results recorded in Tables 17 and 18.

**Table 17**

| | MI @ 190°C @ 21.6 kg | | Component (pph) | | | |
|---|---|---|---|---|---|---|
| Sample | | Shore D Hardness (0 sec /15 sec) | Modifier H^{a} | F-A^{b} | PVC^{*} | CaCO₃ |
| PVC1 | 10 | 74/62 | 58 | 0 | 100 | 0 |
| PVC2 | 13 | 75/60 | 58 | 2.5 | 100 | 0 |
| PVC3 | 10 | 75/61 | 58 | 5 | 100 | 0 |
| PVC4 | 26 | 63/42 | 220 | 0 | 100 | 0 |
| PVC5 | 31 | 57/35 | 420 | 0 | 100 | 0 |
| PVC6 | 28 | 55/31 | 620 | 0 | 100 | 0 |
| PVC7 | 13 | 60/38 | 620 | 0 | 100 | 400 |

| | | | | | | |
|---|---|---|---|---|---|---|
| ^{a}Modifier H is Sample W, hereinabove. | | | | | | |
| ^{b}F-A is Fusabond® A. | | | | | | |
| ^{*}PVC is polyvinylchloride (100 parts Vista 5305, 4 parts Mark 1900, 1 part Seenox 4125, 1 part 1098 stabilizers and 3 parts wax E lubricant) | | | | | | |

**Table 18**

| Sample | Tensile Strength @ Max (psi) | Elongation @ Max (%) | Tensile Strength @ Break (psi) | Elongation @ Break (%) |
|---|---|---|---|---|
| PVC1 | 4377 | 152 | 4139 | 154 |
| PVC2 | 4902 | 185 | 4598 | 188 |
| PVC3 | 4510 | 188 | 4509 | 188 |
| PVC4 | 4096 | 239 | 4090 | 238 |
| PVC5 | 3990 | 251 | 3982 | 251 |
| PVC6 | 4005 | 268 | 3996 | 268 |
| PVC7 | 2489 | 209 | 2486 | 209 |

### Examples 79A - 79D

Pellets of Modifier H and PVC powder were continuously fed to a 30 mm Buss Kneader and melt compounded at 200°C, strand quenched and pelletized in a continuous manner. Physical properties of injection molded parts were measured and recorded in Table 17A and 18A.

**Table 17A**

| | MI @ 190°C @ 21.6 kg (@ 2.16 kg) | | Component (pph) | | |
|---|---|---|---|---|---|
| Sample | | Shore D Hardness (0 sec /15 sec) | Modifier H^{a} | PVC^{*} | Atomite Whiting |
| PVC8 | 23 (0.2) | 65/42 | 220 | 105 | 0 |
| PVC9 | 18 (0.1) | 56/32 | 420 | 105 | 0 |
| PVC10 | 50 (0.5) | 55/32 | 620 | 105 | 0 |
| PVC11 | 45 (0.4) | 62/40 | 620 | 105 | 400 |

| | | | | | |
|---|---|---|---|---|---|
| ^{a}Modifier H is Sample W, hereinabove. | | | | | |
| ^{*}PVC is polyvinylchloride (100 parts Vista 5305, 4 parts Mark 1900, 1 part Seenox 4125, 1 part 1098 stabilizers and 3 parts wax E lubricant) | | | | | |

**Table 18A**

| Sample | Tensile Strength @ Max/Break/Yield (psi) | Elongation @ Max/Break/Yield (%) | Flexural Modulus (psi) | Not. Izod (ft-Ibs/in) | Gardner Impact¹ (in.-lbs.) @ 23°C (-30°C) |
|---|---|---|---|---|---|
| PVC8 | 2827/2751/727 | 180/188/8 | 17077 | NB | NB (24) |
| PVC9 | 2682/2044/535 | 213/249/9 | 8262 | NB | NB (30) |
| PVC10 | 2641/2446/309 | 270/283/9 | 3096 | NB | NB (22) |
| PVC11 | 1817/1721/412 | 134/183/7 | 7272 | NB | NB (16) |

| | | | | | |
|---|---|---|---|---|---|
| ¹1/8" plaques, NB IS>320. | | | | | |

### Examples 86 - 91

In these examples, the components were continuously fed into a 30 mm twin-screw extruder and melt compounded at 240°C, quenched and pelletized in a continuous process. Physical properties were tested on injection molded parts and the results recorded in Tables 19 and 20.

**Table 19**

| Sample¹ | Component (pph) | | Not. Izod (ft-lbs./in) | | MI @ 230°C @ 2160 g | Shore D Hardness (0 sec /15 sec) |
|---|---|---|---|---|---|---|
| | Modifier G^{a} | Ny^{b} | | | | |
| NYG1 | 0 | 100 | 1.2^{c} | 1.1^{d} | 29 | 84/73 |
| NYG2 | 5 | 95 | 1.7^{c} | 1.7^{d} | 27 | 83/72 |
| NYG3 | 10 | 90 | 1.3^{c} | 1.8^{d} | 24 | 80/70 |
| NYG4 | 20 | 80 | 1.9^{c} | 2.4^{d} | 20 | 77/68 |
| NYG5 | 30 | 70 | 2.6^{c} | 2.8^{d} | 15 | 78/66 |
| NYG6 | 40 | 60 | 3.1^{c} | 3.7^{d} | 16 | 77/65 |

| | | | | | | |
|---|---|---|---|---|---|---|
| ¹Samples include 0.1 pph Irganox® 1010 | | | | | | |
| ^{a}Modifier G is Sample U, hereinabove. | | | | | | |
| ^{b}Nylon 6 (Capron 8202). | | | | | | |
| ^{c}Gate. | | | | | | |
| ^{d}Far. | | | | | | |

**Table 20**

| Sample | Tensile Strength @ Max/Break/Yield (psi) | Elongation @ Max/Break/Yield (%) | Flexural Modulus (psi) | Gardner Impact¹ (in.-Ibs.) @ 23°C (-30°C) |
|---|---|---|---|---|
| NYG1 | 9097/5692/9069 | 11/119/11 | 175929 | 256 (124) |
| NYG2 | 8121/6155/8110 | 10/185/11 | 158759 | 280(160) |
| NYG3 | 9002/8901/7370 | 291/299/11 | 157952 | NB^{*} (152) |
| NYG4 | 7830/7783/5804 | 270/272/16 | 136746 | NB (144) |
| NYG5 | 7164/7059/5021 | 248/249/33 | 119748 | NB (148) |
| NYG6 | 6740/6734/4634 | 256/257/41 | 83800 | NB (168) |

| | | | | |
|---|---|---|---|---|
| ¹1/8" plaques, NB IS>320. | | | | |
| ^{*}NB is "no break". | | | | |

### Examples 92 - 97

In these examples, the pellet components were continuously fed into a 30 mm twin-screw extruder and melt compounded at 240°C, quenched and pelletized in a continuous process. Physical properties were tested on injection molded parts, and the results recorded in Tables 21 and 22.

**Table 21**

| Sample¹ | Component (pph | | Not. Izod (ft-lbs./in) | | MI @ 230°C @ 2160 g | Shore D Hardness (0 sec /15 sec) |
|---|---|---|---|---|---|---|
| | Modifier H^{a} | Ny^{b} | | | | |
| NYH1 | 0 | 100 | 1.6^{c} | 1.5^{d} | 28 | 79/70 |
| NYH2 | 5 | 95 | 1.9^{c} | 2.8^{d} | 26 | 81/71 |
| NYH3 | 10 | 90 | 2.0^{c} | 2.9^{d} | 26 | 82/71 |
| NYH4 | 20 | 80 | 2.9^{c} | 6.0^{d} | 17 | 79/69 |
| NYH5 | 30 | 70 | 4.1^{c} | 13^{d} | 17 | 77/67 |
| NYH6 | 40 | 60 | NB* | NB | 16 | 75/62 |

| | | | | | | |
|---|---|---|---|---|---|---|
| ¹Samples include 0.1 pph Irganox® 1010 | | | | | | |
| ^{a}Modifier H is Sample W, hereinabove. | | | | | | |
| ^{b}Nylon 6 (Capron 8202). | | | | | | |
| ^{*}NB is "no break". | | | | | | |
| ^{c}Gate. | | | | | | |
| ^{d}Far. | | | | | | |

**Table 22**

| Sample | Tensile Strength @ Max/Break/Yield (psi) | Elongation @ Max/Break/Yield (%) | Flexural Modulus (psi) | Gardner Impact¹(in.-lbs.) @ 23°C (-30°C) |
|---|---|---|---|---|
| NYH1 | 9139/6290/9125 | 11/160/11 | 171118 | - (-) |
| NYH2 | 10133/10064/7948 | 315/316/10 | 166320 | NB^{*} (160) |
| NYH3 | 9780/9699/7777 | 302/310/10 | 170931 | NB (170) |
| NYH4 | 7914/7867/5717 | 271/273/9 | 129558 | NB (200) |
| NYH5 | 7721/7635/5540 | 262/264/9 | 117750 | NB (172) |
| NYH6 | 6353/6335/4383 | 245/245/43 | 83500 | NB (NB) |

| | | | | |
|---|---|---|---|---|
| ¹1/8" plaques, NB IS>320. | | | | |
| ^{*}NB is "no break". | | | | |

In the above Examples, Initial Modulus, Tensile strength, and Elongation were determined by ASTM D-1708; Flexural Modulus was determined by ASTM D-790; Melt index was determined by ASTM D-1238; Shore A Hardness and Shore D Hardness were determined by ASTM D-2240; IZOD was determined by ASTM D-256.

## Claims

1. A non-blocking chemically modified polyvinylbutyral (PVB) composition in pellet form, comprising a chemically modified PVB, wherein the modified PVB is the reaction product of unmodified polyvinylbutyral, having hydroxyl functionality, and a second component or mixture, wherein the second component reacts with at least a portion of the hydroxyl functionality of the PVB.

2. The PVB composition of Claim 1, wherein the PVB composition does not block at a temperature in the range of from above about 4°C to below about 75°C.

3. The PVB composition of Claim 2 wherein the PVB composition does not block at a temperature in the range of from above about 4°C to below about 60°C.

4. The PVB composition of Claim 3 wherein the PVB composition does not block at a temperature in the range of from above about 4°C to below about 50°C.

5. The PVB composition of Claim 1 wherein the second component is a polymer having functional groups selected from the group consisting of: anhydrides, carboxylic acids, carboxylic acid esters, or mixtures of any of these.

6. The composition of any of Claims 1 - 5 wherein the pellets include at least one other thermoplastic polymer selected from the group consisting of: polyvinylchloride; nylon; polypropylene; polyethylene; olefinic copolymers; like polymers or mixtures thereof.

7. A process for converting polyvinylbutyral into pellet form, wherein the pellets do not adhere to one another in such a manner that they become blocked, the process comprising the steps: (i) mixing polyvinylbutyral and a second component or mixture under conditions suitable to cause a reaction between PVB and at least one other component to obtain a chemically modified PVB composition, wherein the other component is reactive with hydroxyl functionality; and (ii) converting the modified PVB composition into pellet form by physical or mechanical means at a temperature of above about 4°C.

8. The process of Claim 7 wherein the pellets are obtained by a continuous process.

9. A continuous process for obtaining blends of modified PVB with a thermoplastic polymer comprising the step: continuously mixing a modified PVB composition with a thermoplastic polymer composition.

10. The process of Claim 9 wherein the thermoplastic polymer is selected from the group consisting of: polypropylene; polyvinyl chloride; nylon, and olefinic copolymers.

11. An article comprising the composition of either of Claims 1 or 6.

## Patentansprüche

1. Nicht blockende chemisch modifizierte Polyvinylbutyral(PVB)-Zusammensetzung in Pelletform, umfassend ein chemisch modifiziertes PVB, wobei das modifizierte PVB das Reaktionsprodukt von unmodifiziertem Polyvinylbutyral mit Hydroxylfunktionalität und einer zweiten Komponente oder einem Gemisch ist, wobei die zweite Komponente mit zumindest einem Teil der Hydroxylfunktionalität des PVB reagiert.

2. PVB-Zusammensetzung nach Anspruch 1, wobei die PVB-Zusammensetzung bei einer Temperatur in dem Bereich von oberhalb etwa 4°C bis unterhalb etwa 75°C nicht blockt.

3. PVB-Zusammensetzung nach Anspruch 2, wobei die PVB-Zusammensetzung bei einer Temperatur in dem Bereich von oberhalb etwa 4°C bis unterhalb etwa 60°C nicht blockt.

4. PVB-Zusammensetzung nach Anspruch 3, wobei die PVB-Zusammensetzung bei einer Temperatur in dem Bereich von oberhalb etwa 4°C bis unterhalb etwa 50°C nicht blockt.

5. PVB-Zusammensetzung nach Anspruch 1, wobei die zweite Komponente ein Polymer mit funktionellen Gruppen, ausgewählt aus der Gruppe, bestehend aus: Anhydriden, Carbonsäuren, Carbonsäureestern oder Gemischen von irgendwelchen von diesen, ist.

6. Zusammensetzung nach einem der Ansprüche 1-5, wobei die Pellets mindestens ein anderes thermoplastisches Polymer, ausgewählt aus der Gruppe, bestehend aus: Polyvinylchlorid; Nylon; Polypropylen; Polyethylen; olefinischen Copolymeren; ähnlichen Polymeren oder Gemischen davon, einschließen.

7. Verfahren zum Umwandeln von Polyvinylbutyral in Pelletform, wobei die Pellets nicht in einer derartigen Weise aneinander haften, daß sie geblockt werden, wobei das Verfahren die Schritte umfaßt: (i) Mischen von Polyvinylbutyral und einer zweiten Komponente oder einem Gemisch unter Bedingungen, geeignet, um eine Reaktion zwischen PVB und mindestens einer anderen Komponente zu bewirken, um eine chemisch modifizierte PVB-Zusammensetzung zu erhalten, wobei die andere Komponente mit Hydroxylfunktionalität reaktiv ist, und (ii) Umwandeln der modifizierten PVB-Zusammensetzung in Pelletform durch physikalische oder mechanische Mittel bei einer Temperatur von oberhalb etwa 4°C.

8. Verfahren nach Anspruch 7, wobei die Pellets durch ein kontinuierliches Verfahren erhalten werden.

9. Kontinuierliches Verfahren, um Mischungen von modifiziertem PVB mit einem thermoplastischen Polymer zu erhalten, umfassend den Schritt: kontinuierliches Mischen einer modifiziertem PVB-Zusammensetzung mit einer thermoplastischen PolymerZusammensetzung.

10. Verfahren nach Anspruch 9, wobei das thermoplastische Polymer aus der Gruppe, bestehend aus: Polypropylen; Polyvinylchlorid; Nylon und olefinischen Copolymeren, ausgewählt ist.

11. Gegenstand, umfassend die Zusammensetzung nach einem der Ansprüche 1 oder 6.

## Revendications

1. Composition de poly(butyral de vinyle) (PVB) chimiquement modifié non bloquant sous forme de pastilles, comprenant un PVB chimiquement modifie, dans laquelle le PVB modifié est le produit de la réaction de poly(butyral de vinyle) non modifié, ayant une fonctionnalité hydroxyle et un second composant ou mélange, dans laquelle le second composant réagit avec au moins une partie de la fonctionnalité hydroxyle du PVB.

2. Composition de PVB selon la revendication 1 dans laquelle la composition de PVB ne bloque pas à une température dans l'intervalle de plus d'environ 4°C à moins d'environ 75°C.

3. Composition de PVB selon la revendication 2 dans laquelle la composition de PVB ne bloque pas à une température dans l'intervalle de plus d'environ 4°C à moins d'environ 60°C.

4. Composition de PVB selon la revendication 2 dans laquelle la composition de PVB ne bloque pas à une température dans l'intervalle de plus d'environ 4°C à moins d'environ 50°C.

5. Composition de PVB selon la revendication 1 dans laquelle le second composant est un polymère ayant des groupements fonctionnels choisis parmi le groupe constitué de : anhydrides, acides carboxyliques, esters d'acide carboxylique ou mélanges de n'importe lesquels de ceux-ci.

6. Composition selon l'une quelconque des revendications 1-5 dans laquelle les pastilles incluent au moins un autre polymère thermoplastique choisi parmi le groupe constitué de : poly(chlorure de vinyle) ; Nylon ; polypropylène ; polyéthylène ; copolymères oléfiniques ; polymères assimilés ou mélanges de ceux-ci.

7. Procédé pour convertir du poly(butyral de vinyle) sous forme de pastilles, dans lequel les pastilles n'adhèrent pas les unes aux autres de manière qu'elles se bloquent, le procédé comprenant les étapes : (i) de mélange du poly(butyral de vinyle) et d'un second composant ou mélange sous des conditions adéquates pour provoquer une réaction entre le PVB et au moins un autre composant pour obtenir une composition de PVB chimiquement modifié où l'autre composant est réactif avec la fonctionnalité hydroxyle ; et (ii) la conversion de la composition de PVB modifié sous forme de pastilles par des moyens physiques ou mécaniques à une température supérieure à environ 4°C.

8. Procédé selon la revendication 7 dans lequel les pastilles sont obtenues par un procédé en continu.

9. Procédé en continu pour obtenir des mélanges de PVB modifié avec un polymère thermoplastique comprenant l'étape de mélange en continu d'une composition de PVB modifié avec une composition de polymère thermoplastique.

10. Procédé selon la revendication 9 dans lequel le polymère thermoplastique est choisi parmi le groupe constitué de : polypropylène ; poly(chlorure de vinyle) ; Nylon et copolymères oléfiniques.

11. Article comprenant la composition selon l'une quelconque des revendications 1 ou 6.
